Europäisches Patentamt

European Patent Office

Office européen des brevets

(19)

(11) Publication number: **0 453 000 A2**

# EUROPEAN PATENT APPLICATION

(12)

(21) Application number: **91111632.5**

(22) Date of filing: **03.09.87**

(51) Int. Cl.⁵: **C10G 11/18, B01J 8/32**

This application was filed on 12 - 07 - 1991 as a divisional application to the application mentioned under INID code 60.

(30) Priority: **03.09.86 US 903367**

(43) Date of publication of application:
**23.10.91 Bulletin 91/43**

(60) Publication number of the earlier application in accordance with Art.76 EPC: **0 259 153**

(84) Designated Contracting States:
**BE DE FR GB IT NL**

(71) Applicant: **MOBIL OIL CORPORATION**
**3225 Gallows Road**

**Fairfax, Virginia 22037-0001(US)**

(72) Inventor: **Herbst, Joseph Anthony**
**60 Bryant Road**
**Turnersville, New Jersey 08012(US)**
Inventor: **Owen, Hartley**
**5 Riverview Terrace**
**Belle Mead, New Jersey 08502(US)**
Inventor: **Schipper, Paul Herbert**
**2506 Berwyn Road**
**Wilmington, Delaware 19810(US)**

(74) Representative: **Curtis, Philip Anthony**
**Patent Department, Mobil Court 3 Clements Inn**
**London WC2A 2EB(GB)**

(54) **Process an apparatus for two-phase fluid catalytic cracking.**

(57) A fluid catalytic cracking (FCC) process and apparatus for elutriatable catalyst mixtures. An additive, preferably comprising intermediate pore zeolites, such as ZSM-5, and conventional FCC catalyst are used. An elutriating stripper separates the catalyst mixture. The additive is recycled to the FCC reactor. The conventional catalyst passes to a regenerator and then to the FCC reactor. The elutriating stripper employs a vessel and concentric cylinders forming an annular space.

FIG.1

EP 0 453 000 A2

This invention relates to a process and apparatus for fluid catalytic cracking a hydrocarbon feed using a mixture of two different kinds of cracking catalyst particles.

In the conventional FCC, or Fluidized Catalytic Cracking processes, a hydrocarbon feedstock, such as gas oil, is cracked in an elongated reactor riser, at high temperature, to lighter hydrocarbon products. Known catalysts include large pore crystalline zeolites, such as zeolite X or Y, and intermediate pore crystalline zeolites, such as ZSM-5. The reaction products with spent catalysts, are discharged into a separator located in an enclosed stripping vessel, with the spent catalyst flowing downwardly therein. Entrained hydrocarbons are stripped from spent catalyst with stripping gas, such as steam or nitrogen. The stripped catalyst is then regenerated in a fluidized bed regenerator. Following regeneration, the catalyst is recycled to the riser to crack more feed. FCC processes are described in U. S. 3,617,497 and 4,219,407.

An FCC catalyst of mixtures of ZSM-5 and other zeolites is disclosed in U. S. 3,758,403 to Rosinski et al. The ZSM-5 circulates with the other catalysts.

It would be desirable to provide a process and apparatus which can use conventional FCC catalysts and a different catalyst, e.g., an intermediate pore zeolite catalysts, and regenerate the conventional catalyst more than the different catalyst.

In US 4,116,814, Zahner teaches use of two different kinds of catalyst, with separation of catalysts occuring in the fluidized regenerator. This approach will work, but when a less coke sensitive catalyst containing ZSM-5 is used the catalyst spends time unnecessarily in the regenerator.

Another approach to keeping the ZSM-5 additive out of the regenerator is to make it very light, so that it can be collected in secondary cyclones downstream of the riser reactor. The use of ZSM-5 additive with very small particle size and catalyst recycle from secondary cyclones will work but will result in rapid loss of ZSM-5 additive with catalyst fines. Use of light, or low density, ZSM-5 additive will minimize the residence time of the ZSM-5 in the riser reactor because the light additive catalyst will not "slip" in the riser as much as the conventional catalyst. The light ZSM-5 will be largely kept out of the regenerator, but at the price of less residence time in the riser reactor.

U. S. 4,336,160 reduces hydrothermal degradation by staged regeneration. However, all the catalyst from the reactor still is regenerated, thus providing opportunity for hydrothermal degradation.

It would be desirable to provide a process and apparatus which avoids sending a catalyst, such as intermediate pore zeolite catalysts, unnecessarily to the regenerator. Many additive catalysts, such as intermediate pore zeolite catalysts, do not deactivate with the amount of coke on it from one pass through the reactor riser. Sending this partially-coked, but still highly active, intermediate pore zeolite catalyst to the regenerator results in unnecessary hydrothermal degradation of the intermediate pore zeolite catalyst in the regenerator.

Separation of catalyst in the regenerator helps, but still exposes the additive to unnecessary regeneration. Use of a light-weight (or small size) additive can minimize additive residence time in the regenerator, but also minimizes additive residence time in the riser reactor.

A way has now been discovered to overcome the shortcomings of the prior art.

Accordingly, the present invention provides an apparatus for separating more elutriatable particles from less elutriatable particles, characterized by a vessel comprising sidewalls, a top portion and a bottom portion, an inlet for admitting particles into the top portion and an outlet for withdrawing less elutriatable particles from the bottom portion of vessel; a first cylinder concentric with the vessel, and defining a first annulus and having a bottom opening; a stripping gas inlet in a lower portion of the vessel for countercurrently contacting particles with stripping gas, thereby elutriating more elutriatable particles into the first cylinder bottom opening; and a withdrawal conduit for removing the more elutriatable particles in communication with an upper portion of the first cylinder.

In another embodiment, the present invention provides an FCC process using the above apparatus to separate an additive catalyst from conventional catalyst, with recycle of additive catalyst to the FCC reactor.

The present invention will be more fully understood when considered in conjunction with the following drawings, of which:

Fig. 1 is a schematic diagram of an FCC reactor and regenerator of a first embodiment of the invention;

Fig. 2 is a schematic diagram of an FCC reactor and regenerator of a second embodiment of the invention;

Fig. 3 is a perspective view of a portion of Fig. 2; and

Fig. 4 is a schematic diagram of an FCC reactor and regenerator of a third embodiment of the invention.

Conventional FCC catalyst components are amorphous or zeolites in an amorphous matrix, e.g., crystalline silica-alumina and an amorphous matrix. Other materials said to be useful as cracking catalysts are crystalline silicoaluminophosphates of U. S. 4,440,871 and crystalline metal aluminophosphates of U. S. 4,567,029.

Most FCC units use a large pore crystalline silicate zeolite, in a matrix component which may or may not itself possess catalytic activity. These zeolites typically have an average crystallographic pore dimension of about 7.0 Angstroms and above for their major pore opening. Representative zeolites include zeolite X (U. S. 2,882,244), zeolite Y (U. S. 3,130,007), zeolite ZK-5 (U. S. 3,247,195), zeolite ZK-4 (U. S. 3,314,752), zeolite beta, and naturally-occurring zeolites, such as chabazite, faujasite, mordenite, and the like. Also useful are the silicon-substituted zeolites described in U.S. Patent No. 4,503,023. Zeolite Beta is yet another large pore crystalline silicate which can be used.

Two or more of the foregoing amorphous and/or large pore crystalline cracking catalysts can be the conventional catalyst. The additive catalyst system can be any catalyst which requires more or less frequent regeneration than the conventional catalyst. Thus, for example, 3 mixed catalyst system of the invention can be a conventional catalyst comprising zeolite Y, which requires frequent regeneration, but is fairly stable in the regenerator, and an additive catalyst comprising Zeolite Beta, which need not be regenerated as frequently.

Preferred conventional catalyst zeolite components include mordenite, faujasite, zeolites X and Y, with particular preference being accorded zeolites Y, REY, USY and RE-USY and mixtures thereof.

Preferred additive catalysts comprise the shape-selective medium pore crystalline silicates, ZSM-5, ZSM-11, ZSM-12, ZSM-23, ZSM-35, ZSM-38, ZSM-48, and other similar materials.

U. S. 3,702,886 and U. S. Reissue 29,948 describe ZSM-5. U. S. 4,061,724 describes a high silica ZSM-5 referred to as "silicalite".

ZSM-11 is described in U. S. 3,709,979.

ZSM-12 is described in U. S. 3,832,449.

ZSM-23 is described in U. S. 4,076,842.

ZSM-35 is described in U. S. 4,016,245.

ZSM-38 is described in U. S. 4,046,859.

ZSM-48 is described in U. S. 4,375,373.

ZSM-5 is particularly preferred.

In general, the aluminosilicate zeolites are preferred. However, zeolites with some other framework elements present in partial or total substitution of aluminum can be advantageous. For example, such zeolites may provide a higher conversion of feed to aromatic components, the latter tending to increase the octane, and therefore the quality, of the gasoline produced in the process. Illustrative of elements which can be substituted for part or all of the framework aluminum are boron, gallium, titanium and, in general, any trivalent metal which is heavier than aluminum. Specific examples of such catalysts include ZSM-5 and Zeolite Beta containing boron, gallium and/or titanium. In lieu of, or in addition to, being incorporated into the zeolite framework, these and other catalytically active elements can also be deposited upon the zeolite by any suitable procedure, e.g., impregnation.

Separation of additive catalyst from conventional catalyst component in the stripping unit is accomplished by elutriation.

Separation in the stripper is achieved by classifying the first and second catalyst components according to their physical properties, e.g., average particle densities, and size. These can be made significantly different in various ways.

The physical properties of the conventional and additive catalysts are selected so they exhibit different settling rates, designated $R_1$ and $R_2$, respectively. This permits the catalyst particles having the greater settling rate (preferably, the conventional catalyst requiring frequent regeneration) to separate from the additive catalyst having the lower settling rate. The catalysts are separately sent to a regenerator, and to the reactor. Residence time of catalyst in the stripper is primarily dependent on two factors: the linear velocity of the fluid in the stripper which lifts catalyst up and the opposing force of gravity which pulls the catalyst down. In conventional catalyst stripping all catalyst components circulate through the stripper at about the same rate. When medium pore zeolites or other catalyst additives are used which do not require frequent regeneration the additives are needlessly subjected to the catalyst-degrading conditions of the regenerator. The result useful life of the additive is shortened. However, in accordance with this invention, it is possible to separate in the stripper the catalysts and to divert an additive catalyst away, or into, the regenerator. To promote separation of additive from conventional catalyst in the stripper the average density, particle size and/or shape of the additive can be adjusted to provide the desired settling characteristics.

Among the techniques which can be used for making one catalyst component more dense than the other is compositing with a matrix component of substantially different density. Useful matrix components include:

3

EP 0 453 000 A2

| Matrix Component | Particle Density (g/cc) |
|---|---|
| Alumina | 3.9 - 4.0 |
| Silica | 2.2 - 2.6 |
| Magnesia | 3.6 |
| Beryllia | 3.0 |
| Barium Oxide | 5.7 |
| Zirconia | 5.6 - 5.9 |
| Titania | 4.3 - 4.9 |

Combinations of two or more of these and/or other suitable porous matrix components, e.g., silica-alumina, silica-magnesia, silica-thoria, silica-alumina-zirconia, etc., can be used for a wide spectrum of density values.

The additive can be either more or less elutriable than the conventional catalyst.

The stripper will separate additive from conventional catalyst. The separated additive can be sent to the FCC reactor. If the additive is more elutriable than the conventional FCC catalyst, then the catalyst will be removed overhead in the stripper. If the additive is heavier, it will be withdrawn from the base of the stripper.

For many FCC units, operation with ZSM-5 additive in a heavy matrix is preferred. The factors which favor use of heavy, less elutriable ZSM-5 are:

1. Bottom catalyst draw from regenerator.
2. More slip of ZSM-5 in the riser reactor.
3. Less loss of ZSM-5 with catalyst fines.
4. Dense catalysts are usually less subject to attrition.

Factors which favor use of a light, more elutriable ZSM-5 or other additive are:

1. Too, catalyst draw from regenerator.
2. Stripper needs to elute only a small amount of additive.

In general, the additive matrix used will be picked to cause the additive catalyst to be less dense than the catalyst requiring frequent regeneration. For example, in the case of a mixed catalyst system containing medium pore additive and large pore zeolite conventional catalyst, where it is desired to elute additive overhead from the stripping zone, the overall packed density of additive, inclusive of its matrix component, can vary from 0.4 to 1.1 $gm/cm^3$, and preferably from 0.6 to 1.0 $gm/cm^3$, when the overall packed density of the conventional catalyst ranges from 0.6 to 4.0 $gm/cm^3$ density, and preferably from 1.5 to 3.0 $gm/cm^3$. The densities can be reversed when the additive is to the less elutriable catalyst.

A useful technique for increasing the density of catalyst is to composite it with a material which cokes up faster than, e.g., the medium pore zeolite additive, resulting in an increase in the density of the conventional catalyst in situ. Hydrated alumina in situ forms a transition alumina which has a faster coking rate than, for example zeolite Y. Zeolite Y has a faster coking rate than ZSM-5. This embodiment possesses several additional advantages. In the coked-up state, the composited large pore silicate zeolite is more resistant to attrition, which results from collision with other particles in the riser. In addition, the coked-up composited large pore zeolite particles will tend to accumulate metals present in the feed.

The relative settling rate of particles also is a function of particle size. Large particles settle faster than small particles of the same density. To increase the elutriatability, e.g., of the additive over the conventional catalyst, the average particle size of the additive will be smaller. For example, the average particle size of the large pore zeolite particles can be made to vary from 500 to 70,000 microns, and preferably from 100 to 25,000 microns, while the average particle size of the medium pore zeolite particles can be made to vary from 20 to 150 microns, and preferably from 50 to 100 microns.

The shape, or geometric configuration, of particles also affects their relative settling rates, the more irregular the shape (i.e., the more the shape deviates from a sphere), the greater the settling rate. Irregular-shaped particles can be simply and readily achieved by crushing the catalyst-matrix extrudate or using an extruded catalyst.

4

Settling rate for a particular catalyst component will result from the interaction of each of the three foregoing factors, i.e., density, average particle size and particle shape. The factors can be combined in such a way that they each contribute to the desired result. For example, the particles of one component, e.g., the more coke deactivated catalyst can simultaneously be made denser, larger and more irregular in shape than the additive catalyst particles not requiring frequent regeneration. However, a differential settling rate can still be provided, even if one of the foregoing factors partially offsets another, as would be the case where greater density and smaller average particle size co-exist in the same catalyst particle. The combined effect of these factors will result in a significant differential in settling rates.

The additive, e.g., shape-selective zeolite catalyst can be present in the mixed catalyst system over widely varying levels. For example, the additive zeolite concentration can be as low as 0.01 to 1.0 wt % of the total catalyst inventory (as in in U. S. 4,368,114), and can represent as much as 25 wt % of the total catalyst inventory.

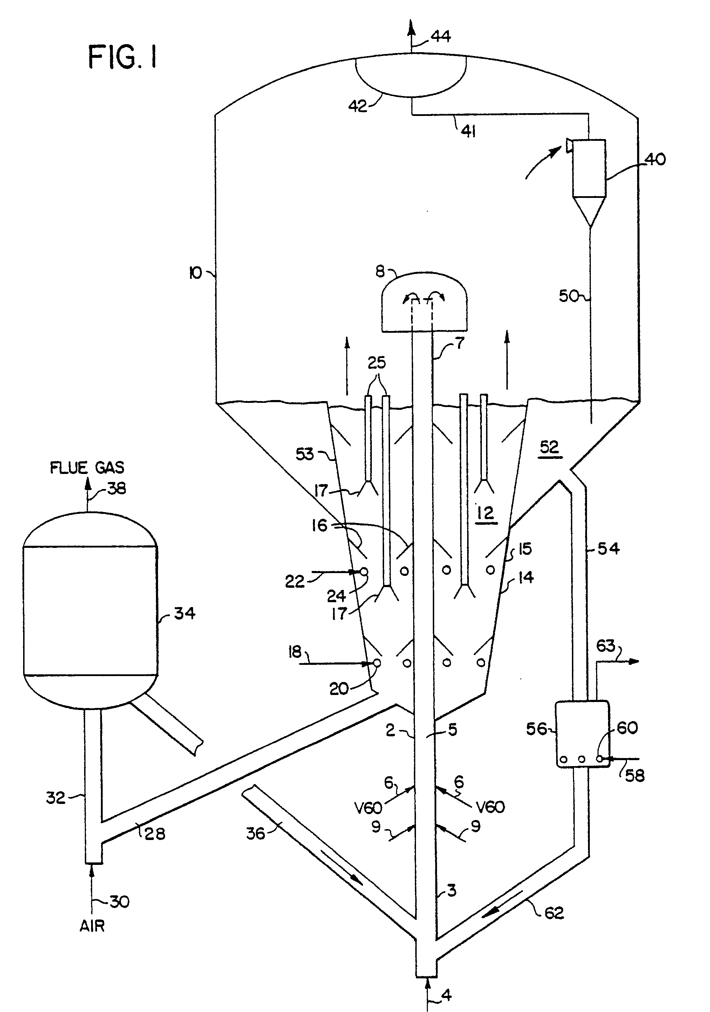

As shown in Fig. 1, conventional catalyst from conduit 36 and a more elutriable of catalyst from conduit 62 combine with a lift gas stream 4 in FCC riser 2. The catalyst mixture comprises particles of conventional FCC catalyst, preferably comprising zeolite X or Y, and particles of an elutriable additive, preferably comprising an intermediate pore zeolite, most preferably ZSM-5. The intermediate pore zeolite, if used, may contain a heavy metal, such as gallium or barium, or both, as part of its framework structure. Preferably, the lift gas contains olefins having 2 to 4 carbon atoms which react in riser 2. Some reactions of olefins in a fluid catalytic cracking reactor riser are more fully discussed in U. S. 3,894,931

Although a lift gas and mid riser addition of feed is shown in the drawing, it is not essential. All the conventional FCC feed can be added via line 4.

The catalyst and lift gas form a mixture which passes up from lower zone 3 into zone 5 of the riser 2. Most preferably, the lift gas 4 contains ethylene. An optional feedstream 9, comprising olefins having 3 to 4 carbon atoms, is injected into zone 3 of riser 2 downstream of where the lift gas 4 combines with catalyst, This maximizes ethylene contact time and promotes dimerization of the ethylene. A conventional FCC feed, e.g., a vacuum gas oil (VGO) stream 6 is added in zone 5. Conventional feeds include gas oils, thermal oils, residual oils, cycle stocks, whole crudes, tar sand oils, shale oils, cycle stocks, synthetic fuels, heavy hydrocarbon fractions derived from the destructive hydrogenation of coal, tar, pitches, asphalts, hydrotreated feedstocks derived from any of the foregoing, and the like. The mixture then continues up under catalytic cracking conditions, including a mixture temperature of 482 to 732 $^\circ$C (900$^\circ$ and 1350$^\circ$ F), and is discharged from riser 2 at downstream end 7 in a reactor vessel 10. Olefins from streams 4, 9 in zone 3 dimerize and oligomerize and produce reactive molecular fragments which may subsequently react with cracked VGO in the riser 2. The mixture discharges from the riser 2 and contacts a riser cover 8, which downwardly directs the mixture into a catalyst bed 12 contained within a tapered catalyst stripping vessel 14 having frustoconical sidewalls 15.

As cracking takes place in riser 2, coke deposits on the conventional catalyst, e.g., the large pore zeolite, and deactivates it. The additive, e.g., a ZSM-5 based catalyst is fairly resistant to coking and will retain its catalytic activity. The conventional catalyst is on less elutriable particles. The additive is on more elutriable particles. The conventional catalyst is less elutriable by having a greater density or average particle diameter, or both. Employing an irregularly-shaped particle has directionally the same effect on elutriation as increasing particle size. An example of an irregularly-shaped particle is an extruded pellet or crushed pellet. An example of a regularly-shaped particle is a microsphere. Thus, the irregular particles are less elutriable than regularly-shaped particles, having about the same particle density and hydraulic diameter. The conventional catalyst becomes heavier, and accordingly less elutriable, during processing because of coking. There is less coking on the ZSM-5 additive. This allows the additive to be elutriated and to bypass regeneration for recycle directly from stripping to the reactor riser. The conventional catalyst passes from the stripper to the regenerator.

Stripping gas enters stripper 14 via stripping gas conduits 18, 22 attached to headers 20, 24, respectively. Gas passes up through bed 12, and countercurrently contacts catalyst. More elutriable catalyst particles pass up and out of bed 12. Much of the catalyst settles out in bed 52. Some eluted catalyst is entrained in stripping gas, and eventually in cracked hydrocarbon product vapor. The combined stripping gas and product vapor pass through a cyclone 40 in an upper portion of vessel 10. Cyclone 40 recovers entrained catalyst from gases which are removed via overhead conduit 41, plenum chamber 42 and exit through a conduit 44. Recovered catalyst passes through dipleg 50 to annular bed 52. Annular bed 52 surrounds stripper 14. A number of cyclones 40, in parallel or series, may be used. Catalyst passes from bed 52 into conduit 54, and then into an optional second stripper 56. In stripper 56, the more elutriable catalyst may be stripped with a stripping gas introduced via conduit 58 and header 60. Alternatively, a reactivation treatment can be given to this catalyst. It is also possible to do nothing, and skip this second stripping step. The more elutriatable catalyst eventually passes via conduit 62 to the riser 2. Stripped hydrocarbons may be discharged from stripper 56 via conduit 63 to vessel 10 or to downstream fractionation (not shown).

The less elutriatable catalyst continues downwardly through the stripper 14 and contacts perforated trays 16 (baffles), attached to the sidewalls 15 or the riser 2, and trays 17 (baffles) located apart from the sidewalls 15 and riser 2. Trays 16, 17 are annular. Optionally, riser tubes 25 are attached to the trays 17. Some of the more elutriatable catalyst may pass up through the tubes 25 to exit bed 12. Catalyst elutriated through tubes 25 does not have to overcome the resistance of the bed 12.

The sidewalls 15 are preferably tapered so that the diameter of stripper 14 is less at the bottom than at the top. This higher gas velocity in the bottom promotes elutriation of particles not elutriated at the top.

Catalyst is withdrawn from the stripper via conduit 28 and discharged into a regenerator riser 32, where it passes with lift airstream 30 into the conventional regenerator 34. Flue gas exits via conduit 38. Regenerated catalyst returns via conduit 36 to riser 2.

The Fig. 1 embodiment bypasses elutriatable catalyst around the regenerator. The present invention minimizes regeneration of intermediate pore zeolite catalyst and minimizes hydrothermal deactivation. As intermediate pore zeolite catalyst deactivates less from coking than the conventional catalyst, the present invention prevents unnecessarily sending catalyst to the regenerator, thus reducing regenerator duty.

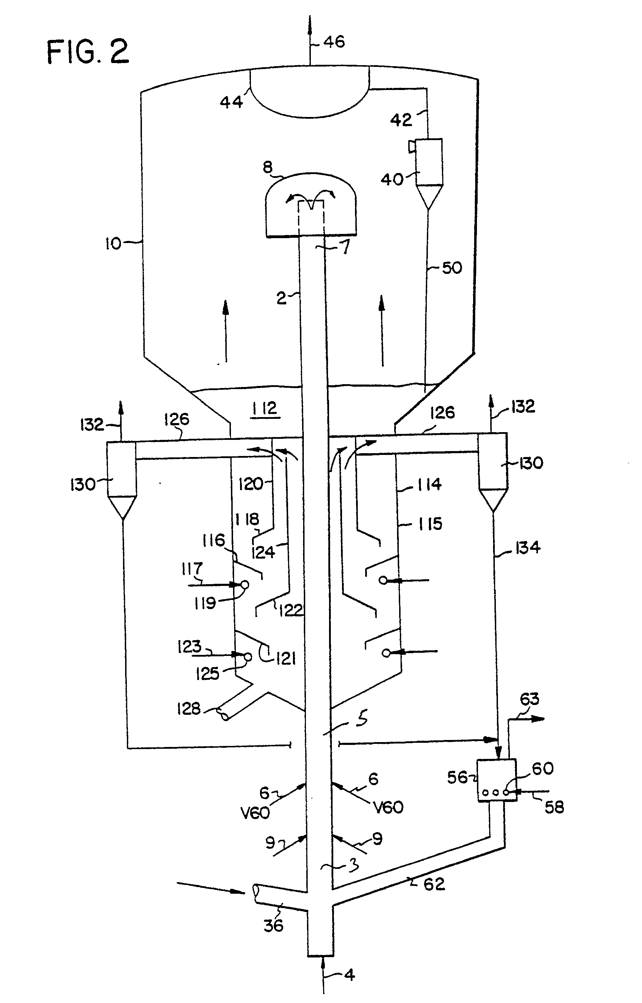

A second embodiment of the present invention is shown in Fig. 2 where like-numbered items are the same as in Fig. 1.

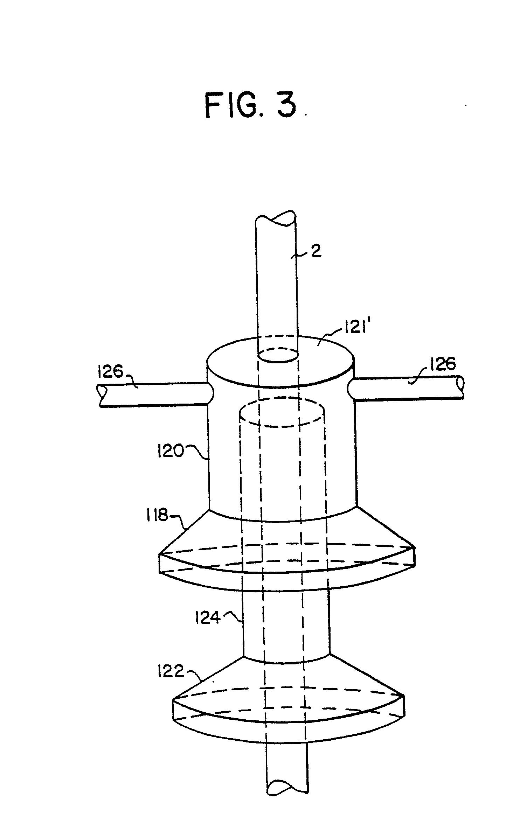

Catalyst and cracked products discharge from riser 2 and are deflected down into bed 112 in a lower portion of vessel 10. The catalyst in bed 112 passes down through stripper 114 having perforated trays 116 (baffles) attached to sidewalls 115, a first cylinder 120 and a second cylinder 124. Both cylinders are concentric with the sidewalls 115 and the riser 2. A first inside perforated tray 118 is attached to first cylinder 120 and a second inside perforated tray 122 is attached to second cylinder 124. A top portion of cylinder 124 is inserted into first cylinder 120. Conduit 126 communicates with both cylinders 120, 124. As best seen in Fig. 3, first cylinder 120 has a top wall 121' to keep out catalyst from bed 112.

Catalyst passes down through an annulus between sidewall 115 and cylinder 120 and contacts perforated trays 118 and 116. Stripping gas from a conduit 117 passes into a header 119 located below tray 116, and strips downwardly passing catalyst.

Elutriatable catalyst rises into an annulus between cylinder 120 and cylinder 124. The remaining catalyst continues down to perforated trays 122 and 121. More stripping gas, from conduit 123 and header 125 under tray 121, contacts falling catalyst. Some catalyst elutes up into an annulus between cylinder 124 and riser 2. Less elutriatable catalyst continues down through conduit 128 to the regenerator (not shown).

The elutriated catalyst portions pass in parallel, through the annulus between cylinders 120, 124 and cylinder 124 and riser 2, through conduit 126 to cyclones 130, which separate gas from catalyst. Two to eight cyclones 130 would be typically provided. The gas passes through overhead conduits 132 to vessel 10. The catalyst is discharged via diplegs 134 to the optional, but preferred, second stripper 56 and recycled to riser 2. The more elutriatable catalyst has a higher ratio of intermediate pore zeolite to large pore zeolite than the conventional catalyst which exits the stripper via conduit 128. In Fig. 2, the more elutriatable catalyst in bed 112 can freely pass up through cylinders 120, 124 and conduit 126 in bed 112, rather than push all the way through the catalyst bed 112 for quicker and more efficient separation of more from less elutriatable catalyst.

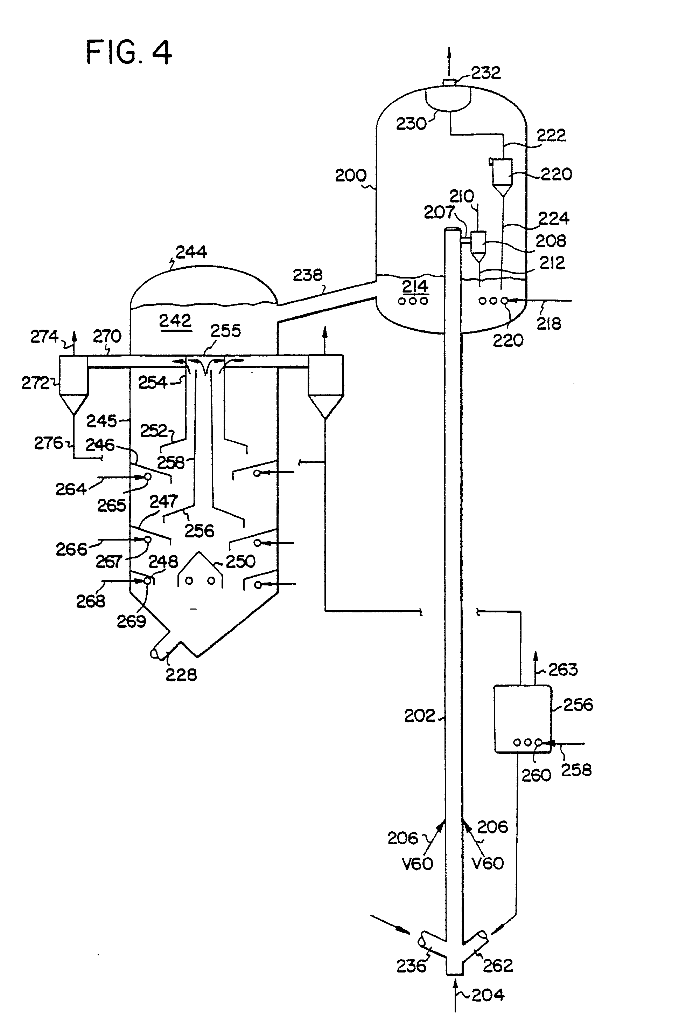

Fig. 4 shows a third embodiment of the present invention, with stripper 244 external to a vessel 200. As seen in Fig. 4, catalyst from conduit 236, attached to a regenerator (not shown), catalyst from conduit 262 and a lift gas stream 204 pass upwardly through a riser 202. A vacuum gas oil (VGO) stream 206 is added and passes up through the riser which discharges into vessel 200. Preferably, the lift gas 204 contains $C_2$-$C_4$ olefins. Most preferably, the lift gas 204 contains ethylene and an optional feedstream 209, comprising olefins having 3 to 4 carbon atoms, is injected into the riser 202 between where the lift gas 204 and VGO stream 206 enters the riser. The riser discharges into a riser cyclone 208. The cyclone 208 separates gas from catalyst. Catalyst is discharged via dipleg 212 to catalyst bed 214. Gas passes via overhead conduit 210 to a cyclone 220 which discharges catalyst through dipleg 224 to bed 214. The gas passes up through a conduit 222 to plenum chamber 230, and through conduit 232 out of the reactor vessel 200 to downstream processing, such as fractionation (not shown).

Catalyst in bed 214 is a stripped with from stripping gas conduit 218 attached to a header 219. Stripped catalyst passes via conduit 238 to catalyst bed 242 in stripper 244.

Stripper vessel 244 contains cylinder 254 attached to inside perforated tray 252, top wall 255, cylinder 258 attached to a second inside perforated tray 256, and annular outer perforated trays 246, 247 attached to the sidewalls 245. The catalyst in bed 242 passes down and contacts trays 252 and 246. Stripping gas, from conduit 264, attached to a header 265 located under tray 246, passes up through tray 246 to strip downwardly passing catalyst. Elutriatable catalyst passes up through an annulus between the first and second cylinders 254 and 258. Less elutriatable catalyst continues down to trays 256 and 247.

Stripping gas from conduit 266 and header 267 passes through tray 247 to strip the catalyst and to separate an elutriatable portion of catalyst which passes up through cylinder 258. Less elutriatable catalyst continues down and contacts a conical perforated tray 250 and annular perforated tray 248. More stripping gas from conduit 268 header 269 passes through trays 248 and 250. A third portion of catalyst passes through cylinder 258. The remaining less elutriatable catalyst passes down via through conduit 228, to a regenerator, not shown.

Elutriated catalyst passes up in parallel through the cylinders 254, 258 and conduit 270 to a cyclone 272 which separates gas from catalyst. The gas passes up through cyclone withdrawal conduit 274 to vessel 200. The catalyst passes via dipleg 276 to a second stripper 256. Stripping gas from conduit 258 and header 260 produce stripped catalyst which recycles via conduit 262 to riser 202. Gaseous effluent passes via conduit 263 to vessel 200.

The less elutriatable catalyst in conduit 228 has a higher ratio of large pore zeolite to intermediate pore zeolite than the catalyst in conduit 270.

The system of Fig. 4 can be added easily to FCC units having separate strippers. Stripper 244 efficiently separates more elutriatable from less elutriatable because the separated particles do not have to push all the way through catalyst bed 242.

## Claims

1. An apparatus for separating more elutriatable particles from less elutriatable particles, characterized by
   a vessel 114 comprising sidewalls 115, a top portion 121' and a bottom portion, an inlet for admitting particles into the top portion and an outlet 128 for withdrawing less elutriatable particles from the bottom portion of vessel 114;
   a first cylinder 120 concentric with the vessel 114, and defining a first annulus and having a bottom opening;
   a stripping gas inlet 117, 119 in a lower portion of the vessel for countercurrently contacting particles with stripping gas, thereby elutriating more elutriatable particles into the first cylinder 120 bottom opening;
   a withdrawal conduit 126 for removing the more elutriatable particles in communication with an upper portion of the first cylinder 120.

2. The apparatus of Claim 1, further characterized by a second cylinder 124 comprising sidewalls, an upper portion and a lower portion, the second cylinder 124 defining a top opening and a bottom opening, the upper portion being inserted into the first cylinder 120;
   outer trays 116, 121 within vessel 114 and attached to the sidewalls, stripping gas inlet 119, 125 below the outer trays; a first inner tray 118 attached to a lower portion of the first cylinder 120, wherein the first cylinder 120 comprises a top wall and sidewalls;
   a second inner tray 122 attached to the lower portion of the second cylinder 124;
   the first cylinder 120 and the second cylinder 124 defining a second annulus:
   the first annulus being in communication with a lower portion of the second annulus; and
   the second cylinder 124 bottom opening being in communication with an interior of the vessel 114, the second cylinder 124 top opening being in communication with the withdrawal conduit 126.

3. A fluid catalytic cracking process for contacting a conventional feed at conventional cracking conditions with a conventional catalyst in a conventional riser cracking reactor 2, to produce spent catalyst and cracked products separating spent catalyst from cracked products, stripping spent catalyst and regenerating it in a conventional catalyst regenerator 34 characterized by using an elutriable mixture of conventional catalyst and additive catalyst in the riser reactor 2;
   discharging the elutriable mixture from the riser 2 and passing the elutriable mixture to the stripper 14, 114 and countercurrently contacting the elutriable catalyst mixture with stripping gas 18, 22, 117, 119 to elute the catalyst mixture into a conventional catalyst rich portion and an additive rich portion;
   regenerating the conventional catalyst in the regenerator 34; and
   recycling the additive catalyst to the reactor riser 2.

4. The process of Claim 3 further characterized in that the additive is more elutriable than the conventional catalyst and the additive is elutriated with stripping gas.

5. The process of Claim 3 further characterized in that the additive is less elutriable than the conventional catalyst and the conventional catalyst is elutriated with stripping gas.

6. The process of any of claims 3 to 5 further characterized in that the additive catalyst is reactivated with a gas selected from the group of $H_2$, $C_2$ - $C_4$ olefins, methane, ethane, propane, and butane, after stripping but before recycle to the reactor 2.

7. The process of any preceding claim further characterized in that the additive contacts a lift gas in the base of the riser.

8. The process of Claim 7 further characterized in that the additive contacts a lift gas which comprises olefins having 2 to 4 carbon atoms.

FIG. 1

EP 0 453 000 A2

EP 0 453 000 A2

FIG. 2

# FIG. 3

# FIG. 4